# EUROPEAN PATENT SPECIFICATION

(11) **EP 3 704 618 B1**
(45) Date of publication and mention of the grant of the patent: **26.03.2025**
(21) Application number: 18872842.2
(22) Date of filing: 31.10.2018
(51) Int. Cl.: H04L 9/40, G06F 21/55

(54) **CYBER SECURITY SYSTEM FOR NETWORKED DEVICES**
CYBERSECURITY-SYSTEM FÜR VERNETZTE VORRICHTUNGEN
SYSTÈME DE CYBERSÉCURITÉ POUR DES DISPOSITIFS EN RÉSEAU

(30) Priority: 31.10.2017 US 201762579230 P
(43) Date of publication of application: 09.09.2020
(73) Proprietor: Cyberswarm, Inc., 100030 Ploiesti OT (RO)
(72) Inventor: IONESCU, Octavian, Ploiesti OT (RO); CONSTANTINESCU, Zoran, Ploiesti OT (RO); SERBAN, Bogdan Catalin, Bucuresti OT (RO); BUIU, Octavian, Bucuresti OT (RO); BUIU, Andrei, Bucuresti OT (RO)
(74) Representative: Omnis-IP
(86) International application number: PCT/IB2018/058563
(87) International publication number: WO 2019/087114

(56) References cited:
- EP-A2- 2 035 948
- EP-B1- 2 035 948
- CN-A- 104 571 055
- US-A1- 2006 117 385
- US-A1- 2006 117 385
- US-A1- 2009 276 538
- US-A1- 2013 317 693
- US-A1- 2017 230 832
- US-B1- 6 504 693

## Description

The present invention concerns a cyber security system and method for networked devices.

Cyber security threats have escalated dramatically in the past few years. Many networked devices, such as IoT (Internet of Things) devices, may be vulnerable to cyber security threats. Such devices may need to be protected against unauthorized interference from people and/or other devices. Unauthorized access may allow cyber criminals to modify parameters of a user's devices and thus to make their life miserable, for example.

Cyber security systems have been described in several publications. For example, US publication N° US 2006/117385 describes a method and an apparatus for propagating protection within a network. The method comprises monitoring data being transmitted from a portion of the network to another portion of the network. This data is analyzed to determine whether it represent a threat to the network. The analysis is performed by a sensor device comprising a bridge module containing two interfaces, two transceivers and a failsafe module.

A first interface is connected to a first portion of the network and a second interface is connected to a second portion of the network. Under normal operation, the bridging module isolates the first interface from the second interface. Data from the first portion of the network is received via the first interface by the first transceiver module and transmitted to a data analyzer module. If the data analyzer module determines that the data does not represent a threat, the data is transmitted to the second transceiver module and, via the second interface, to the second portion of the network.

In the case the bridge module receives no power or in failure conditions, the failsafe module connects the first interface with the second interface using a relay switch that is normally closed in the unpowered state. When the switch is closed, the data flows directly from the first interface to the second interface with no processing by the bridge module.

To determine the presence of a threat, the sensor device monitors the traffic and captures a "snapshot" of connection statistics and compares that snapshot with a baseline. When comparison indicates an abnormal behavior, a threat is considered as being present. When a threat is detected, the sensor device can terminate traffic flows that are deemed harmful.

In order to enable the sensor device to establish statistics and to detect an abnormal behavior, it must be connected most of the time and the switch must be closed by default.

A cyber security system is also described in the US publication US 2009/276538 which concerns a device and a method for providing a network access control. The device includes one or more hardware relays. Each relay controls exactly one physical line. When the relay is closed, traffic flows freely. When the relay is open, network traffic only flows through a packet filter, which may be implemented in software or hardware. This mode is slower than the full rate of the network line. When the relay is closed and traffic flows at full speed, the device checks for specially-formatted "alert" packets. When such an alert packet is detected, the device automatically opens the relay and resumes packet inspection and filtering.

In this invention, the normal working way consists in transmitting data at full speed. When an alert packet is detected, data is checked before transmission, but the communication is not interrupted.

The European patent application EP 2 035 948 also describes a method and a device for transmitting data from a transmitting computer to a receiving computer over a one-way link. In this invention, a physical path between the transmitting computer and the receiving computer is divided into portions comprising one-way links. A data security engine is placed between the one-way links. The transmitting computer is configured to transmit data to the data security engine over a first one-way link. The data security engine is configured to validate data by performing various security tests prior to transmitting the data to the receiving computer over a second one-way link. Invalid data is rejected. Transmissions over the one-way links are set to occur at designated times, such that transmissions do not occur over both the first and second one-way links at the same time.

Relays may optionally be used to physically connect and disconnect each one-way link, thereby ensuring that at least one portion of the physical path is always disconnected. A switch controller may be configured to control the physical relays. The designated times for transmission over each of the one-way links may be established by the transmission of special control signals to the switch controller from the data security engine.

In this invention, there is a need for a specific security engine, which is not suitable for IoT. Moreover, there is always a delay between the emission of data and the reception by the transmission of data receiving computer as the one-way links are not active at the same time.

### BRIEF DESCRIPTIONS OF THE DRAWINGS

FIG. 1 is a network according to an embodiment of the disclosure.
FIG. 2 is a cyber security system according to an embodiment of the disclosure.
FIG. 3 is a cyber security method according to an embodiment of the disclosure.

### DETAILED DESCRIPTIONS OF SEVERAL EMBODIMENTS

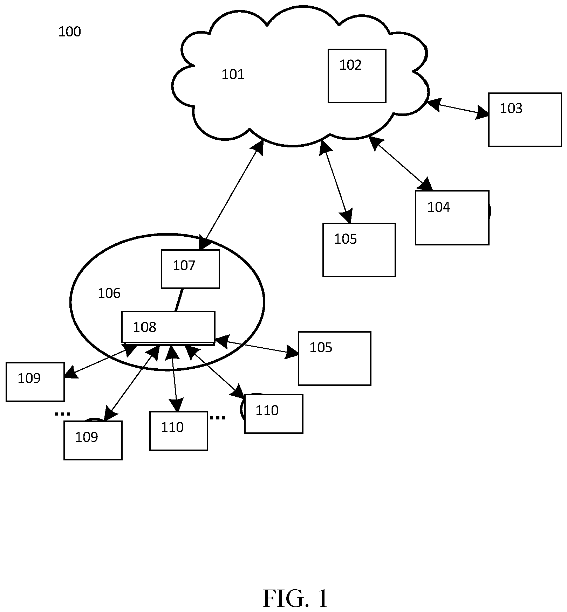

FIG. 1 is a network 100 according to an embodiment of the disclosure. Some components of network 100 may include the cloud 101, which may include one or more servers 102 and/or other devices configured to provide persistent network services through the Internet or another publicly-accessible network. Elements configured to communicate using cloud 101 may include user remote server 103, data analytics system 104, user mobile device 105 (e.g., smart phone, tablet, laptop, etc.), and/or Internet gateway 107 of IoT network 106. IoT network 106 may be a local network allowing one or more IoT devices to access cloud 101 through Internet gateway 107. For example, such devices may include local hub or switch 108, sensors 109, and/or actuators 110.

One weak point in the architecture of FIG. 1 may arise because the IoT sensors 109 and actuators 110 are connected to the cloud server 102 via the Internet gateway 107, which may have weak software protection (e.g., firewall, encryption etc.) and, accordingly, the entire IoT network 106 may rely exclusively on software security tools. This may be contrasted with industrial applications/systems that may use a multi-layered security system that involves firewalls, encryption, honeypots, intrusion detection/prevention systems (IDS/IPS), anti-malware scanners, security information and event management (SIEM), and/or highly trained security teams who may be available at all times. Critical infrastructure, for example big plants and/or governmental facilities, where the safety is an important issue may even be organized based on a M2M (machine to machine) architecture, wherein all communication is implemented on layers and levels with the input and output gateways being very well protected.

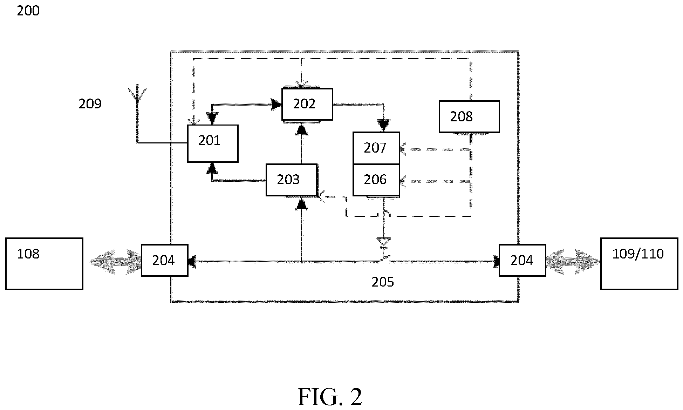

FIG. 2 is a cyber security system 200 according to an embodiment of the disclosure. Cyber security system 200 may protect IoT connected devices with limited resources. In some embodiments, cyber security system 200 may add an additional, independent communication channel which may control a physical communication line between the IoT devices and the cloud (e.g., a physical Ethernet line). In some embodiments, cyber security system 200 may select IoT connected device(s) that are allowed to connect and may establish the right of IoT connected device(s) to read data from sensors and/or modify status of actuators.

Cyber security system 200 may be connected between any network (e.g., Ethernet-connected) switch/router 108 and one or more network-enabled IoT devices 109/110. Cyber security system 200 may include mobile telephony communication transceiver 201 (e.g., which may be configured to communicate via GSM, GPRS, 3G, 4G, 5G, etc.), microcontroller 202, Ethernet or other network connection controller 203 (which may be read only in some embodiments), Ethernet or other network connection connectors 204, circuit breaker 205, relay 206, relay actuator 207, power supply 208, and/or communication antenna 209. Cyber security system 200 may be connected between switch/router 108 and one or more network-enabled IoT devices 109/110 on any physical transmission line (e.g., Ethernet line) through connectors 204.

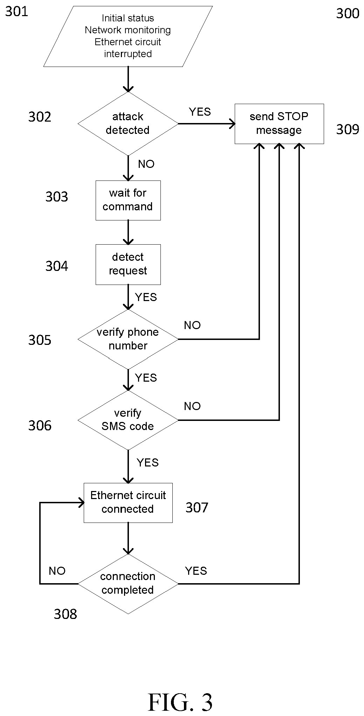

FIG. 3 is a cyber security method 300 according to an embodiment of the disclosure. Cyber security method 300 may be performed by cyber security system 200. While cyber security method 300 is presented in the context of managing an Ethernet connection, system 200 may be used in the same manner for the protection of sensors and actuators which are connected through CAN, Modbus, etc.

At 301, cyber security system 200 may be in an initial status wherein the physical transmission line is disrupted by the normally open contacts of relay 206. During this time, network controller 203 may monitor network traffic data through switch/router 108. Microcontroller 202 may analyze the traffic.

If, at 302, microcontroller 202 detects one or more illegitimate activities in the traffic, process 300 may proceed to 309 where microcontroller 202 may warn the IoT network 106 owner and/or admin, using transceiver 201 and antenna 209 (e.g., through SMS messages or other communications), that it may be unsafe to connect the IoT devices 109/110 to the router 108. Microcontroller 202 may also lock the system traffic (e.g., by maintaining relay 206 open).

If, at 302, microcontroller 202 does not detect illegitimate activities for an established period of time, microcontroller 202 may cause actuator 207 to close relay 206 in some embodiments.

In some embodiments, cyber security system 200 may be configured to respond to user requests to allow communications by the IoT device 109/110. For example, at 303, microcontroller 202 may wait for a command from a user. At 304, transceiver 201 may detect a command from the user. For example, the owner and/or admin may send an SMS message or other communication to unlock the transmission line.

At 305, microcontroller 202 may verify the telephone number to determine whether it is a number recognized as belonging to a valid owner and/or admin (e.g., microcontroller 202 may have been preconfigured with knowledge of this number in memory). If the phone number is not valid, process 300 may proceed to 309 where microcontroller 202 may warn the IoT network 106 owner and/or admin, using transceiver 201 and antenna 209 (e.g., through SMS messages or other communications), that it may be unsafe to connect the IoT devices 109/110 to the router 108. Microcontroller 202 may also lock the system traffic (e.g., by maintaining relay 206 open).

If the identity of the owner or admin is confirmed at 305, the second step of safety may be to verify the content of SMS message. At 306, microcontroller 202 may examine the content of the SMS message to determine whether it matches an established message (e.g., microcontroller 202 may have been preconfigured with knowledge of this message in memory). If the message is not valid, process 300 may proceed to 309 where microcontroller 202 may warn the IoT network 106 owner and/or admin, using transceiver 201 and antenna 209 (e.g., through SMS messages or other communications), that it may be unsafe to connect the IoT devices 109/110 to the router 108. Microcontroller 202 may also lock the system traffic (e.g., by maintaining relay 206 open). Note that in some embodiments, number and message validation steps may be performed in a reverse order from that described here (e.g., verify message first, then number).

If the content of the message corresponds to the one established, at 307, microcontroller 202, through relay actuator 207, may command the relay 202 to close. Thus the transmission line may be opened and data may flow between IoT devices 109/110 and router 108. The transmission line may be connected for an established period of time and, when the time elapses, at 308, microcontroller 202, through relay actuator 207, may command relay 206 to open and interrupt the transmission line.

While various embodiments have been described above, it should be understood that they have been presented by way of example and not limitation. It will be apparent to persons skilled in the relevant art(s) that various changes in form and detail can be made therein without departing from the scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

The invention is set out in the appended set of claims.

## Claims

1. A security system (200) comprising:
a normally open relay (206) between an external network connection and at least one internal network connection;
a network controller (203) configured to monitor for malicious activity on an external network accessible through the external network connection; and
a microcontroller (202) configured to:
cause the normally open relay to temporarily close in response to the network controller failing to detect the malicious activity for a predetermined amount of time; and
cause the normally open relay to remain open and generate an alert in response to the network controller detecting the malicious activity.

2. The security system of claim 1, further comprising a transceiver configured to communicate with at least one external device.

3. The security system of claim 2, wherein the microcontroller is configured to transmit the alert by the transceiver.

4. The security system of claim 2, wherein the microcontroller is further configured to:
receive a command to close the normally open relay by the transceiver;
analyze the command to determine whether the command is valid;
cause the normally open relay to temporarily close in response to determining that the command is valid; and
cause the normally open relay to remain open and generate an alert in response to determining that the command is invalid.

5. The security system of claim 4, wherein the microcontroller is configured to analyze the command by determining a phone number from which the command was sent and determining whether the phone number matches a predetermined phone number.

6. The security system of claim 4, wherein the microcontroller is configured to analyze the command by determining a data content of the command and determining whether the data content matches a predetermined data content.

7. A security method (300) comprising:
monitoring (301), by a network controller, for malicious activity on an external network accessible through an external network connection;
causing, by a microcontroller, a normally open relay between the external network connection and at least one internal network connection to temporarily close in response to the network controller failing to detect the malicious activity for a predetermined amount of time; and
causing, by the microcontroller, the normally open relay to remain open and generating, by the microcontroller, an alert in response to the network controller detecting (302) the malicious activity.

8. The security method of claim 7, further comprising communicating, by a transceiver, with at least one external device.

9. The security method of claim 8, wherein the communicating includes transmitting, from the microcontroller, the alert to the at least one external device.

10. The security method of claim 8, wherein the communicating includes receiving, from the at least one external device, a command to close the normally open relay, the method further comprising:
analyzing, by the microcontroller, the command to determine whether the command is valid;
causing, by the microcontroller, the normally open relay to temporarily close in response to determining that the command is valid; and
causing, by the microcontroller, the normally open relay to remain open and generate an alert in response to determining that the command is invalid.

11. The security method of claim 10, wherein the analyzing includes determining a phone number from which the command was sent and determining whether the phone number matches a predetermined phone number.

12. The security method of claim 10, wherein the analyzing includes determining a data content of the command and determining whether the data content matches a predetermined data content.

## Patentansprüche

1. Ein Sicherheitssystem, umfassend:
ein normalerweise offenes Relais zwischen einer externen Netzwerkverbindung und mindestens einer internen Netzwerkverbindung;
einen Netzwerkcontroller, der so konfiguriert ist, dass er auf einer über die externe Netzwerkverbindung zugänglichen externen Netzwerkverbindung nach bösartigen Aktivitäten sucht; und
einen Mikrocontroller, der konfiguriert ist, um:
das normalerweise offene Relais vorübergehend zu schließen, wenn der Netzwerkcontroller für eine vorbestimmte Zeit keine bösartigen Aktivitäten erkennt; und
das normalerweise offene Relais offen zu lassen und eine Warnung zu erzeugen, wenn der Netzwerkcontroller bösartige Aktivitäten erkennt.

2. Das Sicherheitssystem nach Anspruch 1, ferner umfassend einen Transceiver, der so konfiguriert ist, dass er mit mindestens einem externen Gerät kommuniziert.

3. Das Sicherheitssystem nach Anspruch 2, wobei der Mikrocontroller konfiguriert ist, die Warnung über den Transceiver zu übertragen.

4. Das Sicherheitssystem nach Anspruch 2, wobei der Mikrocontroller ferner konfiguriert ist, um:
über den Transceiver einen Befehl zum Schließen des normalerweise offenen Relais zu empfangen;
den Befehl zu analysieren, um festzustellen, ob der Befehl gültig ist;
das normalerweise offene Relais vorübergehend zu schließen, wenn festgestellt wird, dass der Befehl gültig ist; und
das normalerweise offene Relais offen zu lassen und eine Warnung zu erzeugen, wenn festgestellt wird, dass der Befehl ungültig ist.

5. Das Sicherheitssystem nach Anspruch 4, wobei der Mikrocontroller konfiguriert ist, den Befehl zu analysieren, indem er eine Telefonnummer ermittelt, von der der Befehl gesendet wurde, und feststellt, ob die Telefonnummer mit einer vordefinierten Telefonnummer übereinstimmt.

6. Das Sicherheitssystem nach Anspruch 4, wobei der Mikrocontroller konfiguriert ist, den Befehl zu analysieren, indem er den Dateninhalt des Befehls ermittelt und feststellt, ob der Dateninhalt mit einem vordefinierten Dateninhalt übereinstimmt.

7. Ein Sicherheitsverfahren, umfassend :
• Überwachung durch einen Netzwerkcontroller nach bösartigen Aktivitäten auf einem über eine externe Netzwerkverbindung zugänglichen externen Netzwerk;
• Veranlassung durch einen Mikrocontroller, ein normalerweise offenes Relais zwischen der externen Netzwerkverbindung und mindestens einer internen Netzwerkverbindung vorübergehend zu schließen, wenn der Netzwerkcontroller für eine vorbestimmte Zeit keine bösartigen Aktivitäten erkennt; und
• Veranlassung durch den Mikrocontroller, das normalerweise offene Relais offen zu lassen und durch den Mikrocontroller eine Warnung zu erzeugen, wenn der Netzwerkcontroller bösartige Aktivitäten erkennt.

8. Das Sicherheitsverfahren nach Anspruch 7, ferner umfassend die Kommunikation durch einen Transceiver mit mindestens einem externen Gerät.

9. Das Sicherheitsverfahren nach Anspruch 8, wobei die Kommunikation das Senden der Warnung vom Mikrocontroller an mindestens ein externes Gerät umfasst.

10. Das Sicherheitsverfahren nach Anspruch 8, wobei die Kommunikation den Empfang eines Befehls zum Schließen des normalerweise offenen Relais von mindestens einem externen Gerät umfasst, das Verfahren ferner umfassend:
• die Analyse des Befehls durch den Mikrocontroller, um festzustellen, ob der Befehl gültig ist;
• das vorübergehende Schließen des normalerweise offenen Relais durch den Mikrocontroller, wenn festgestellt wird, dass der Befehl gültig ist; und
• das Offenlassen des normalerweise offenen Relais und die Erzeugung einer Warnung durch den Mikrocontroller, wenn festgestellt wird, dass der Befehl ungültig ist.

11. Das Sicherheitsverfahren nach Anspruch 10, wobei die Analyse die Bestimmung einer Telefonnummer umfasst, von der der Befehl gesendet wurde, und die Feststellung, ob die Telefonnummer mit einer vordefinierten Telefonnummer übereinstimmt.

12. Das Sicherheitsverfahren nach Anspruch 10, wobei die Analyse die Bestimmung eines Dateninhalts des Befehls umfasst und die Feststellung, ob der Dateninhalt mit einem vordefinierten Dateninhalt übereinstimmt.

## Revendications

1. Un système de sécurité comprenant :
un relais normalement ouvert entre une connexion réseau externe et au moins une connexion réseau interne ;
un contrôleur de réseau configuré pour surveiller les activités malveillantes sur un réseau externe accessible via la connexion réseau externe ; et
un microcontrôleur configuré pour :
faire en sorte que le relais normalement ouvert se ferme temporairement en réponse à l'absence de détection d'activité malveillante par le contrôleur de réseau pendant une période de temps prédéterminée ; et
faire en sorte que le relais normalement ouvert reste ouvert et génère une alerte en réponse à la détection d'activité malveillante par le contrôleur de réseau.

2. Le système de sécurité selon la revendication 1, comprenant en outre un émetteur-récepteur configuré pour communiquer avec au moins un dispositif externe.

3. Le système de sécurité selon la revendication 2, dans lequel le microcontrôleur est configuré pour transmettre l'alerte par l'émetteur-récepteur.

4. Le système de sécurité selon la revendication 2, dans lequel le microcontrôleur est en outre configuré pour :
recevoir une commande pour fermer le relais normalement ouvert via l'émetteur-récepteur ;
analyser la commande pour déterminer si la commande est valide ;
faire en sorte que le relais normalement ouvert se ferme temporairement en réponse à la détermination que la commande est valide ; et
faire en sorte que le relais normalement ouvert reste ouvert et génère une alerte en réponse à la détermination que la commande est invalide.

5. Le système de sécurité selon la revendication 4, dans lequel le microcontrôleur est configuré pour analyser la commande en déterminant un numéro de téléphone à partir duquel la commande a été envoyée et en déterminant si ce numéro correspond à un numéro de téléphone prédéfini.

6. Le système de sécurité selon la revendication 4, dans lequel le microcontrôleur est configuré pour analyser la commande en déterminant des données contenues dans la commande et en vérifiant si ces données correspondent à un contenu de données prédéfini.

7. Une méthode de sécurité comprenant :
• la surveillance, par un contrôleur de réseau, d'activités malveillantes sur un réseau externe accessible via une connexion réseau externe ;
• l'action, par un microcontrôleur, de fermer temporairement un relais normalement ouvert entre la connexion réseau externe et au moins une connexion réseau interne en réponse à l'absence de détection d'activité malveillante par le contrôleur de réseau pendant une période de temps prédéterminée ; et
• l'action, par le microcontrôleur, de maintenir le relais normalement ouvert et de générer une alerte en réponse à la détection d'activité malveillante par le contrôleur de réseau.

8. La méthode de sécurité selon la revendication 7, comprenant en outre la communication, par un émetteur-récepteur, avec au moins un dispositif externe.

9. La méthode de sécurité selon la revendication 8, dans laquelle la communication comprend la transmission, par le microcontrôleur, de l'alerte au au moins un dispositif externe.

10. La méthode de sécurité selon la revendication 8, dans laquelle la communication comprend la réception, en provenance du au moins un dispositif externe, d'une commande pour fermer le relais normalement ouvert, la méthode comprenant en outre :
• l'analyse, par le microcontrôleur, de la commande pour déterminer si elle est valide ;
• l'action, par le microcontrôleur, de fermer temporairement le relais normalement ouvert en réponse à la détermination que la commande est valide; et
• l'action, par le microcontrôleur, de maintenir le relais normalement ouvert et de générer une alerte en réponse à la détermination que la commande est invalide.

11. La méthode de sécurité selon la revendication 10, dans laquelle l'analyse comprend la détermination d'un numéro de téléphone à partir duquel la commande a été envoyée et la vérification si ce numéro correspond à un numéro de téléphone prédéfini.

12. La méthode de sécurité selon la revendication 10, dans laquelle l'analyse comprend la détermination de données contenues dans la commande et la vérification si ce contenu de données correspond à un contenu de données prédéfini.
